# EUROPEAN PATENT APPLICATION

(11) **EP 4 517 899 A1**
(43) Date of publication of application: **05.03.2025**
(21) Application number: 23819892.3
(22) Date of filing: 08.06.2023
(51) Int. Cl.: H01M 10/0566, H01M 10/054, H01M 10/0567, H01M 10/0568, H01M 10/0569

(54) **ELECTROLYTE SOLUTION FOR MAGNESIUM BATTERIES, AND MAGNESIUM BATTERY**

(30) Priority: 09.06.2022 JP 2022093569
(71) Applicant: Murata Manufacturing Co., Ltd., Nagaokakyo-shi, Kyoto 617-8555 (JP)
(72) Inventor: SUZUKI, Yoshiaki, Nagaokakyo-shi, Kyoto 617-8555 (JP); MORI, Daisuke, Nagaokakyo-shi, Kyoto 617-8555 (JP); NAKAYAMA, Yuri, Nagaokakyo-shi, Kyoto 617-8555 (JP); KAWASAKI, Hideki, Kyoto-shi, Kyoto 600-8813 (JP)
(74) Representative: Witte, Weller & Partner Patentanwälte mbB
(86) International application number: PCT/JP2023/021369
(87) International publication number: WO 2023/238912

(57) **Abstract**

An electrolytic solution for a magnesium battery includes a solvent, an electrolyte salt, and an additive. The electrolyte salt includes a magnesium salt represented by Formula (1). The additive includes at least one of a first magnesium compound represented by Formula (2), a second magnesium compound represented by Formula (3), or a polycyclic aromatic hydrocarbon.

Mg[B(OC(R1)₃)₄]₂ ...... (1)

where:
each of 24 R1's is any one of hydrogen (H), fluorine (F), an alkyl group, or a fluorinated alkyl group; and
at least one of 24 R1's is either fluorine or the fluorinated alkyl group.

Mg[(N(Si(R2)₃)₂]₂ ...... (2)

where each of 12 R2's is either hydrogen or an alkyl group.

Mg(R3)₂ ...... (3)

where each of two R3's is either hydrogen or boron hydride (BH₄).

## Description

### Technical Field

The technology relates to an electrolytic solution for a magnesium battery, and to a magnesium battery.

### Background Art

Development of a magnesium battery has been promoted. The magnesium battery includes a positive electrode, a negative electrode, and an electrolytic solution (an electrolytic solution for the magnesium battery). The electrolytic solution includes a magnesium salt as an electrolyte salt.

Several techniques each related to a configuration of a magnesium battery have already been known. Specifically, a magnesium salt (Mg[B(OCH(CF₃)₂)₄]₂) is synthesized using a magnesium compound (Mg(BH₄)₂) as a raw material (for example, see NPL 1), and an electrolytic solution including the magnesium salt is proposed (for example, see NPL 2). Further, an electrolytic solution including a particular anion (B(OCH(CF₃)₂)₄⁻) and magnesium chloride (MgCl₂) is proposed (for example, see PTL 1).

### Citation List

### Patent Literature

PTL 1: Japanese Unexamined Patent Application Publication No. H08-171916

### Non-Patent Literature

NPL 1: A new class of non-corrosive, highly efficient electrolytes for rechargeable magnesium batteries, J. Mater. Chem. A 2017, 5, 10815-10820
NPL 2: Critical Issues of Fluorinated Alkoxyborate-Based Electrolytes in Magnesium Battery Applications, ACS Appl. Mater. Interfaces 2020, 12, 39135-39144

### Summary of the Invention

Although consideration has been given in various ways as to a configuration of a magnesium battery, an electrolytic solution to be included in the magnesium battery still remains insufficient in electrochemical activity. Accordingly, there is still room for improvement in terms of the electrochemical activity.

It is desirable to provide an electrolytic solution for a magnesium battery, and a magnesium battery each of which makes it possible to achieve superior electrochemical activity.

An electrolytic solution for a magnesium battery according to one embodiment of the technology includes a solvent, an electrolyte salt, and an additive. The electrolyte salt includes a magnesium salt represented by Formula (1). The additive includes at least one of a first magnesium compound represented by Formula (2), a second magnesium compound represented by Formula (3), or a polycyclic aromatic hydrocarbon.

Mg[B(OC(R1)₃)₄]₂ ...... (1)

where:
each of 24 R1's is any one of hydrogen (H), fluorine (F), an alkyl group, or a fluorinated alkyl group; and
at least one of 24 R1's is either fluorine or the fluorinated alkyl group.

Mg[(N(Si(R2)₃)₂]₂ ...... (2)

where each of 12 R2's is either hydrogen or an alkyl group.

Mg(R3)₂ ...... (3)

where each of two R3's is either hydrogen or boron hydride (BH₄).

A magnesium battery according to one embodiment of the technology includes a positive electrode, a negative electrode, and an electrolytic solution for a magnesium battery. The electrolytic solution for a magnesium battery has a configuration similar to the above-described configuration of the electrolytic solution for a magnesium battery according to one embodiment of the technology.

According to the electrolytic solution for a magnesium battery of one embodiment of the technology or the magnesium battery of one embodiment of the technology: the electrolytic solution for a magnesium battery includes the electrolyte salt and the additive; the electrolyte salt includes the magnesium salt; and the additive includes at least one of the first magnesium compound, the second magnesium compound, or the polycyclic aromatic hydrocarbon. Accordingly, it is possible to achieve superior electrochemical activity.

Note that effects of the technology are not necessarily limited to those described above and may include any of a series of effects described below in relation to the technology.

### Brief Description of Drawings

[FIG. 1] FIG. 1 is an example of a result (a cyclic voltammogram) obtained by analysis of an electrolytic solution by cyclic voltammetry.
[FIG. 2] FIG. 2 is a schematic sectional diagram illustrating a configuration of a magnesium battery according to one embodiment of the technology.

### Modes for Carrying Out the Invention

Some embodiments of the technology are described below in detail with reference to the drawings. The description is given in the following order.
1. Electrolytic Solution for Magnesium Battery
   1-1. Configuration
   1-2. Manufacturing Method
   1-3. Action and Effects
   1-4. Electrochemical Activity of Electrolytic Solution for Magnesium Battery
2. Magnesium Battery
   2-1. Configuration
   2-2. Operation
   2-3. Action and Effects
3. Applications of Magnesium Battery

### <1. Electrolytic Solution for Magnesium Battery>

A description is given first of an electrolytic solution for a magnesium battery (hereinafter simply referred to as an "electrolytic solution") according to an embodiment of the technology.

The electrolytic solution to be described here is a liquid electrolyte, and is to be used in a magnesium battery. However, an application of the electrolytic solution is not limited to the magnesium battery, and the electrolytic solution may also be used in other applications besides the magnesium battery.

### <1-1. Configuration>

The electrolytic solution includes a solvent, an electrolyte salt, and an additive.

### [Solvent]

The solvent is a material in which the electrolyte salt is to be dissolved or dispersed, and includes any one or more of organic solvents.

The solvent is not particularly limited in kind, and preferably includes an ether compound, in particular. A reason for this is that the electrolyte salt is sufficiently dissolved or dispersed.

The term "ether compound" is a generic term for a compound including an ether bond (-O-). The ether compound may be a chain compound or a cyclic compound. Specific examples of the ether compound include dimethoxyethane, diethylene glycol dimethyl ether, tetraethylene glycol dimethyl ether, and tetrahydrofuran. A reason for this is that the electrolyte salt is stably dissolved or dispersed. The specific examples of the ether compound described above are mainly what are called glyme-based ethers.

### [Electrolyte Salt]

The electrolyte salt is a substance that is ionized in the solvent, and includes a magnesium salt. Specifically, the magnesium salt includes any one or more of compounds represented by Formula (1).

Mg[B(OC(R1)₃)₄]₂ ...... (1)

where:
each of 24 R1's is any one of hydrogen (H), fluorine (F), an alkyl group, or a fluorinated alkyl group; and
at least one of 24 R1's is either fluorine or the fluorinated alkyl group.

As is apparent from Formula (1), the magnesium salt is a salt including a magnesium ion (Mg²⁺) as a cation, and two boron-containing ions ([B(OC(R1)₃)₄]⁻) as anions.

Each of 24 R1's is not particularly limited as long as each of 24 R1's is any one of hydrogen, fluorine, an alkyl group, or a fluorinated alkyl group, as described above. Note that at least one or more of 24 R1's are each either fluorine or the fluorinated alkyl group. Therefore, a compound in which all of 24 R1's are each either hydrogen or the alkyl group does not belong to the magnesium salt described here.

A carbon number of the alkyl group is not particularly limited. The alkyl group may have a straight-chain structure or may have a branched structure. Specific examples of the alkyl group include a methyl group and an ethyl group. In particular, the alkyl group is preferably the methyl group. A reason for this is that properties such as solubility of the magnesium salt improve.

The fluorinated alkyl group is a group resulting from substituting one or more hydrogen atoms of the alkyl group with one or more fluorine atoms. A carbon number of the fluorinated alkyl group is not particularly limited, and the number of fluorine atoms included in the fluorinated alkyl group is not particularly limited.

Specific examples of the magnesium salt include Mg[B(OCH(CF₃)₂)₄]₂, Mg[B(OC(CF₃)₃)₄]₂, Mg[B(OCH(CF₃)(CH₃))₄]₂, Mg[B(OC(CF₃)₂(CH₃))₄]₂, Mg[B(OC(CF₃)(CH₃)₂)₄]₂, Mg[B(OCF(CH₃)₂)₄]₂, and Mg[B(OCF(CF₃)₂)₄]₂.

A content (mol/kg) of the electrolyte salt in the electrolytic solution is not particularly limited, and may be set as desired. The content of the electrolyte salt to be described here refers to the content of the electrolyte salt with respect to the solvent.

### [Additive]

The additive includes any one or more of a first magnesium compound, a second magnesium compound, or a polycyclic aromatic hydrocarbon.

A reason why the electrolytic solution includes the additive is that electrochemical activity of the electrolytic solution greatly improves even if the electrolytic solution includes the electrolyte salt (the magnesium salt), as compared with a case where the electrolytic solution does not include the additive and a case where the electrolytic solution includes another additive.

In detail, if the electrolytic solution does not include the additive, it is not possible to achieve sufficient electrochemical activity and, in some cases, it is not possible to achieve electrochemical activity at all.

Further, if the electrolytic solution includes the other additive together with the magnesium salt, the electrochemical activity slightly improves as compared with a case where the electrolytic solution does not include the additive, but the improvement in the electrochemical activity is not sufficient. The other additive is a compound having a structure similar to that of the additive (the first magnesium compound and the second magnesium compound), and is specifically a compound such as magnesium chloride (MgCl₂).

In contrast, when the electrolytic solution includes the additive together with the magnesium salt, a structure of a magnesium complex derived from the magnesium salt is appropriately changed, and a surface of a magnesium metal is activated. This improves ion conductivity of the electrolytic solution. Accordingly, it is possible to achieve superior electrochemical activity.

A content (wt%) of the additive in the electrolytic solution is not particularly limited, and may be set as desired. When the electrolytic solution to be described here includes two or more additives, the content of the additives is a sum total of the respective contents of the two or more additives.

### (First Magnesium Compound)

The first magnesium compound includes any one or more of compounds represented by Formula (2).

Mg[(N(Si(R2)₃)₂]₂ ...... (2)

where each of 12 R2's is either hydrogen or an alkyl group.

As is apparent from Formula (2), the first magnesium compound is a compound in which two bis(trimethylsilyl)amine-type groups (-N(SiR2₃)₂) are bonded to a magnesium atom.

Each of 12 R2's is not particularly limited as long as each of 12 R2's is either hydrogen or the alkyl group, as described above. A carbon number of the alkyl group is not particularly limited, and the alkyl group may have a straight-chain structure or may have a branched structure. Specific examples of the alkyl group include a methyl group and an ethyl group.

Specific examples of the first magnesium compound include Mg[(CH₃)₃Si-N-Si(CH₃)₃]₂.

### (Second Magnesium Compound)

The second magnesium compound includes any one or more of compounds represented by Formula (3).

Mg(R3)₂ ...... (3)

where each of two R3's is either hydrogen or boron hydride (BH₄).

As is apparent from Formula (3), the second magnesium compound is a compound in which two hydrogen-containing groups (R3) are bonded to a magnesium atom. Each of two R3's is not particularly limited as long as each of two R3's is either hydrogen or boron hydride, as described above.

Specific examples of the second magnesium compound include MgH₂ and Mg(BH₄)₂.

### (Polycyclic Aromatic Hydrocarbon)

The term "polycyclic aromatic hydrocarbon" is a generic term for a hydrocarbon in which two or more aromatic rings (benzene rings) that include neither a heteroatom nor a substituent are fused. Only one polycyclic aromatic hydrocarbon may be used, or two or more polycyclic aromatic hydrocarbons may be used.

In the polycyclic aromatic hydrocarbon, the number of aromatic rings and a fused state of the two or more aromatic rings are not particularly limited. That is, the number of aromatic rings is not particularly limited as long as it is two or more. Further, the two or more aromatic rings may be linearly fused or non-linearly fused.

Specific examples of the polycyclic aromatic hydrocarbon in which two or more aromatic rings are linearly fused include naphthalene, anthracene, tetracene, pentacene, hexacene, and heptacene. Specific examples of the polycyclic aromatic hydrocarbon in which two or more aromatic rings are non-linearly fused include phenanthrene, chrysene, pyrene, triphenylene, benzopyrene, corannulene, coronene, and cobarene.

**In** particular, the polycyclic aromatic hydrocarbon preferably includes an acene. A reason for this is that this sufficiently improves the electrochemical activity of the electrolytic solution. Specific examples of the acene include naphthalene, anthracene, tetracene, pentacene, hexacene, and heptacene described above.

### <1-2. Manufacturing Method>

When the electrolytic solution is manufactured, the electrolyte salt including the magnesium salt is added to the solvent, following which the additive is added to the solvent. In this case, any one or more of the first magnesium compound, the second magnesium compound, or the polycyclic aromatic hydrocarbon are included as the additive. The electrolyte salt and the additive are each thereby dissolved or dispersed in the solvent. As a result, the electrolytic solution is prepared.

### <1-3. Action and Effects>

According to the electrolytic solution, the electrolytic solution includes the electrolyte salt and the additive. The electrolyte salt includes the magnesium salt. The additive includes any one or more of the first magnesium compound, the second magnesium compound, or the polycyclic aromatic hydrocarbon.

In this case, as compared with a case where the electrolytic solution does not include the additive and a case where the electrolytic solution includes the other additive, the structure of the magnesium complex derived from the magnesium salt is appropriately changed, and the surface of the magnesium metal is activated, as described above. As a result, the ion conductivity of the electrolytic solution improves. Accordingly, it is possible for the electrolytic solution to achieve superior electrochemical activity.

In particular, if the polycyclic aromatic hydrocarbon includes the acene, the electrochemical activity improves sufficiently. Accordingly, it is possible to achieve higher effects.

Further, if the solvent of the electrolytic solution includes the ether compound, the electrolyte salt is sufficiently dissolved or dispersed in the solvent. Accordingly, it is possible to achieve higher effects. In this case, if the ether compound includes dimethoxyethane, the electrolyte salt is stably dissolved or dispersed. Accordingly, it is possible to achieve even higher effects.

### <1-4. Electrochemical Activity of Electrolytic Solution for Magnesium Battery>

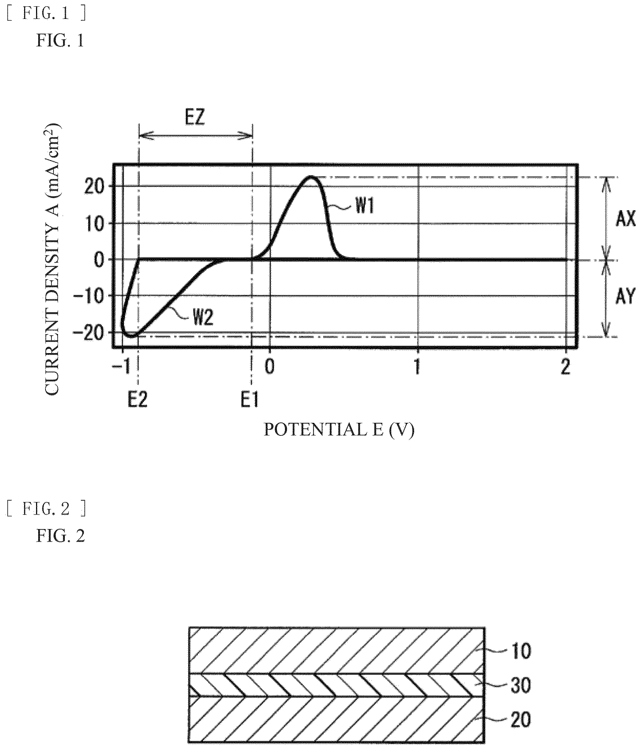

Referring now to FIG. 1, the electrochemical activity of the electrolytic solution will be described in detail. FIG. 1 illustrates an example of a result (a cyclic voltammogram) obtained by analysis of the electrolytic solution by cyclic voltammetry.

Cyclic voltammetry is an analysis method in which a current is measured while a potential is swept in the electrolytic solution. In the cyclic voltammogram, as illustrated in FIG. 1, a horizontal axis represents a potential E (V) and a vertical axis represents a current density A (mA/cm²).

Conditions for analyzing the electrolytic solution are as follows: analysis environment = argon gas atmosphere; working electrode = platinum; reference electrode = magnesium; counter electrode = magnesium; sweep range = from -1 V to -2 V; sweep rate = 25 mV/sec; and number of cycles = 5 cycles.

As is apparent from FIG. 1, in the cyclic voltammogram, when the potential E is swept in a negative direction, an absolute value of the current density A increases and thereafter decreases, which forms a reduction wave W2, and when the battery E is swept in a positive direction, the absolute value of the current density A increases and thereafter decreases, which forms an oxidation wave W1. The oxidation wave W1 represents a change in the current density A during a dissolution process, and the reduction wave W2 represents a change in the current density A during a precipitation process.

Here, a maximum value of the current density A in the oxidation wave W1 (the dissolution process) is referred to as a maximum dissolution current density AX (mA/cm²), and a minimum value of the current density A in the reduction wave W2 (the precipitation process) is referred to as a maximum precipitation current density AY (mA/cm²). Each of the maximum dissolution current density AX and the maximum precipitation current density AY is an index indicating a reaction rate, that is, an index indicating how easily a reaction occurs (what is called a degree of activity).

A difference (= E1 - E2) between a potential E1 and a potential E2 is referred to as a precipitation overvoltage EZ (V), where the potential E1 is a potential at which the absolute value of the current density A starts to increase when the potential E is swept in the positive direction, and the potential E2 is a potential at which the absolute value of the current density A becomes 0 mA/cm² after increasing and then decreasing when the potential E is swept in the negative direction. The precipitation overvoltage EZ is an index indicating a degree of activity of the surface of the magnesium metal. That is, the precipitation overvoltage EZ is another index indicating how easily the reaction occurs (what is called the degree of activity).

Thus, according to the result (the cyclic voltammogram) obtained by the analysis of the electrolytic solution by cyclic voltammetry, it is possible to evaluate the electrochemical activity of the electrolytic solution based on three indices, i.e., the maximum dissolution current density AX, the maximum precipitation current density AY, and the precipitation overvoltage EZ.

When the electrolytic solution does not include the additive and when the electrolytic solution includes the other additive, an absolute value of the maximum dissolution current density AX and an absolute value of the maximum precipitation current density AY each decrease and the precipitation overvoltage EZ increases. It is therefore not possible to achieve sufficient electrochemical activity.

In contrast, when the electrolytic solution includes the additive, the absolute value of the maximum dissolution current density AX and the absolute value of the maximum precipitation current density AY each increase, and the precipitation overvoltage EZ decreases. It is therefore possible to achieve sufficient electrochemical activity.

### <2. Magnesium Battery>

A description is given next of a magnesium battery including the above-described electrolytic solution.

The magnesium battery to be described here includes a positive electrode, a negative electrode, and an electrolytic solution, and the electrolytic solution has the above-described configuration.

### <2-1. Configuration>

FIG. 2 schematically illustrates a sectional configuration of the magnesium battery. As illustrated in FIG. 2, the magnesium battery includes a positive electrode 10, a negative electrode 20, a separator 30, and the electrolytic solution (not illustrated).

### [Positive Electrode]

The positive electrode 10 includes an unillustrated positive electrode current collector and an unillustrated positive electrode active material layer. Note, however, that the positive electrode current collector may be omitted.

The positive electrode current collector is an electrically conductive support that supports the positive electrode active material layer, and includes an electrically conductive material such as nickel. The positive electrode active material layer is provided on the positive electrode current collector. The positive electrode active material layer includes any one or more of positive electrode active materials into which magnesium ions are insertable and from which the magnesium ions are extractable. Note that the positive electrode active material layer may further include any one or more of other materials such as a positive electrode binder and a positive electrode conductor.

The positive electrode active material is not particularly limited in kind, and specific examples thereof include sulfur, graphite fluoride, a metal oxide, and a metal halide. Each of the metal oxide and the metal halide includes any one or more of metal elements such as scandium, titanium, vanadium, chromium, manganese, iron, cobalt, nickel, copper, and zinc as one or more constituent elements.

The positive electrode binder includes any one or more of resin materials such as a fluorine-based resin, a polyvinyl-alcohol-based resin, and a styrene-butadiene-copolymer rubber. Specific examples of the fluorine-based resin include polyvinylidene difluoride and polytetrafluoroethylene. Note that the positive electrode binder may be an electrically conductive polymer compound. Specific examples of the electrically conductive polymer compound include polyaniline, polypyrrole, polythiophene, and a copolymer of two or more thereof. The electrically conductive polymer compound may be unsubstituted, or may be substituted with any one or more functional groups.

The positive electrode conductor includes any one or more of carbon materials. Specific examples of the carbon material include graphite, a carbon fiber, carbon black, and a carbon nanotube. Examples of the carbon fiber include a vapor grown carbon fiber (VGCF). Examples of the carbon black include acetylene black and Ketjen black. Examples of the carbon nanotube include a single-wall carbon nanotube (SWCNT) and a multi-wall carbon nanotube (MWCNT), and examples of the multi-wall carbon nanotube include a double-wall carbon nanotube (DWCNT). Note, however, that examples of the positive electrode conductor may include a metal material and an electrically conductive polymer compound in addition to the carbon material. Specific examples of the metal material include nickel.

### [Negative Electrode]

The negative electrode 20 is opposed to the positive electrode 10 with the separator 30 interposed therebetween. The negative electrode 20 includes an unillustrated negative electrode current collector and an unillustrated negative electrode active material layer. Note, however, that the negative electrode current collector may be omitted.

The negative electrode current collector is an electrically conductive support that supports the negative electrode active material layer, and includes an electrically conductive material such as copper. The negative electrode active material layer is provided on the negative electrode current collector. The negative electrode active material layer includes any one or more of magnesium-based materials. Note that the negative electrode active material layer may further include any one or more of other materials such as a negative electrode binder and a negative electrode conductor.

The term "magnesium-based material" is a generic term for a material including magnesium as a constituent element. That is, the magnesium-based material may be elemental magnesium, an alloy of magnesium, a compound of magnesium, or a mixture of two or more thereof. Purity of elemental magnesium is not particularly limited, and elemental magnesium may therefore include any amount of impurity. A metal element (excluding magnesium) included as a constituent element in the alloy of magnesium is not particularly limited. The compound of magnesium includes any one or more of non-metallic elements such as carbon, oxygen, sulfur, and a halogen as one or more constituent elements. Specific examples of the halogen include fluorine, chlorine, bromine, and iodine.

### [Separator]

The separator 30 is an insulating porous film interposed between the positive electrode 10 and the negative electrode 20, and allows a magnesium ion to pass therethrough while preventing contact (a short circuit) between the positive electrode 10 and the negative electrode 20. The separator 30 includes a polymer compound such as polyethylene.

### [Electrolytic Solution]

The electrolytic solution is a liquid electrolyte with which the separator 30 is impregnated, and has the above-described configuration. That is, the electrolytic solution includes the solvent, the electrolyte salt, and the additive.

### [Other Components]

Note that the magnesium battery may further include any one or more of other components. Specific examples of the other components include an outer package member, a positive electrode lead, and a negative electrode lead.

The outer package member is a member that contains components such as the positive electrode 10, the negative electrode 20, and the separator 30. The outer package member is not particularly limited in kind as long as it is possible for the outer package member to contain components such as the positive electrode 10, the negative electrode 20, and the separators 30. In other words, the outer package member may be a can having rigidity or may be a film having flexibility or softness.

Although FIG. 1 omits detailed illustration in order to simplify contents in the illustration, the positive electrode 10, the negative electrode 20, and the separator 30 may form a wound structure, or may form a stacked structure. In the wound structure, the positive electrode 10 and the negative electrode 20 are wound, being opposed to each other with the separator 30 interposed therebetween. In the stacked structure, the positive electrode 10 and the negative electrode 20 are alternately stacked on each other with the separator 30 interposed therebetween.

The positive electrode lead is an external coupling terminal of the positive electrode 10, and the negative electrode lead is an external coupling terminal of the negative electrode 20. One end part of the positive electrode lead is coupled to the positive electrode 10, and another end part of the positive electrode lead is led to an outside of the outer package member. One end part of the negative electrode lead is coupled to the negative electrode 20, and another end part of the negative electrode lead is led to the outside of the outer package member.

### <2-2. Operation>

During charging of the magnesium battery, magnesium is extracted from the positive electrode 10, and the extracted magnesium is inserted into the negative electrode 20 via the electrolytic solution. During discharging of the magnesium battery, magnesium is extracted from the negative electrode 20, and the extracted magnesium is inserted into the positive electrode 10 via the electrolytic solution. During the charging and the discharging, magnesium is inserted and extracted in an ionic state.

### <2-3. Action and Effects>

According to the magnesium battery, the magnesium battery includes the electrolytic solution, and the electrolytic solution has the above-described configuration. In this case, it is possible for the electrolytic solution to achieve superior electrochemical activity for the reason described above. Accordingly, it is possible to achieve the magnesium battery having superior battery characteristics.

Other action and effects of the magnesium battery are similar to those of the electrolytic solution described above.

### <3. Applications of Magnesium Battery>

Applications (application examples) of the magnesium battery are not particularly limited. The secondary battery used as a power source may serve as a main power source or an auxiliary power source in, for example, electronic equipment and an electric vehicle. The main power source is preferentially used regardless of the presence of any other power source. The auxiliary power source may be used in place of the main power source, or may be switched from the main power source.

Specific examples of the applications of the magnesium battery are as described below. The specific examples include: electronic equipment; apparatuses for data storage; electric power tools; battery packs to be mounted on, for example, electronic equipment; medical electronic equipment; electric vehicles; and electric power storage systems. Examples of the electronic equipment include video cameras, digital still cameras, mobile phones, laptop personal computers, headphone stereos, portable radios, and portable information terminals. Examples of the apparatuses for data storage include backup power sources and memory cards. Examples of the electric power tools include electric drills and electric saws. Examples of the medical electronic equipment include pacemakers and hearing aids. Examples of the electric vehicles include electric automobiles including hybrid automobiles. Examples of the electric power storage systems include battery systems for home use or industrial use in which electric power is accumulated for a situation such as emergency. In each of the above-described applications, one magnesium battery may be used, or multiple magnesium batteries may be used.

The battery packs may each include a battery cell, or may each include an assembled battery. The electric vehicle is a vehicle that travels with the magnesium battery as a driving power source, and may be a hybrid automobile that is additionally provided with a driving source other than the magnesium battery. In the electric power storage system for home use, electric power accumulated in the magnesium battery serving as an electric power storage source may be utilized for using, for example, home appliances.

### Examples

A description is given of Examples of the technology.

### <Examples 1 to 3 and Comparative Examples 1 and 2>

Electrolytic solutions were manufactured, following which the electrolytic solutions were each evaluated for physical properties as described below.

### [Manufacturing of Electrolytic Solution]

First, an electrolyte salt (Mg[B(OCH(CF₃)₂)₄]₂ (MgBOF) as the magnesium salt) was added to a solvent (dimethoxyethane as the ether compound), following which the solvent was stirred by a stirrer to thereby prepare a solution. In this case, the content of the electrolyte salt was 0.3 mol/dm³ with respect to the solvent.

Thereafter, an additive was added to the solution, following which the solution was stirred by a stirrer. Used as the additive were Mg[(N(Si(CH₃)₃)₂)]₂ (MgNS) as the first magnesium compound, Mg(BH₄)₂ (MgBH) as the second magnesium compound, and anthracene (ANT) as the polycyclic aromatic hydrocarbon. In this case, a content of the first magnesium compound in the solution was 0.15 mol/dm³, and a content of the second magnesium compound in the solution and a content of the polycyclic aromatic hydrocarbon in the solution were each 0.01 mol/dm³.

Lastly, the solution was filtered. As a result, an electrolytic solution including the solvent, the electrolyte salt, and the additive was prepared.

Here, an electrolytic solution for comparison was prepared by a similar procedure, except that the additive was not used. In addition, an electrolytic solution for comparison was prepared by a similar procedure, except that another additive (magnesium chloride (MgCl₂)) was used instead of the additive. In this case, a content of the other additive in the solution was 0.15 mol/dm³.

Note that after the preparation of the electrolytic solution, measured by ICP optical emission spectroscopy were: a kind of the electrolyte salt (the magnesium salt) and the content of the electrolyte salt in the electrolytic solution; a kind of the additive and the content of the additive in the electrolytic solution; and a kind of the other additive and the content of the other additive in the electrolytic solution. The results of the measurement were as described above.

### [Evaluation of Physical Properties]

Evaluation of the electrolytic solutions for electrochemical activity revealed the results presented in Table 1.

For evaluating the electrochemical activity of the electrolytic solution, the electrolytic solution was analyzed by cyclic voltammetry, following which the maximum dissolution current density AX (mA/cm²), the maximum precipitation current density AY (mA/cm²), and the precipitation overvoltage EZ (V) were each determined based on the result (the cyclic voltammogram) obtained by the analysis of the electrolytic solution.

The conditions for analyzing the electrolytic solution by cyclic voltammetry, and respective procedures for determining the maximum dissolution current density AX, the maximum precipitation current density AY, and the precipitation overvoltage EZ were as described above.

### [Table 1]

**Table 1**

| | Electrolyte salt | Additive | Other additive | Maximum dissolution current density AX (mA/cm²) | Maximum precipitation current density AY (mA/cm²) | Precipitation overvoltage EZ (V) |
|---|---|---|---|---|---|---|
| Example 1 | MgBOF | MgNS | - | 64 | -62 | 0.55 |
| Example 2 | MgBOF | MgBH | - | 146 | -140 | 0.4 |
| Example 3 | MgBOF | ANT | - | 62 | -42 | 0.6 |
| Comparative example 1 | MgBOF | - | - | 0 | 0 | 2.0 |
| Comparative example 2 | MgBOF | - | MgCl₂ | 22 | -21 | 0.9 |

### [Discussion]

As indicated in Table 1, the electrochemical activity of the electrolytic solution varied greatly depending on the configuration of the electrolytic solution.

Specifically, when the electrolytic solution included neither the additive nor the other additive (Comparative example 1), the absolute value of the maximum dissolution current density AX and the absolute value of the maximum precipitation current density AY were each 0 mA/cm². Accordingly, the electrolytic solution did not become electrochemically active.

Further, when the electrolytic solution included the other additive (Comparative example 2), the absolute value of the maximum dissolution current density AX and the absolute value of the maximum precipitation current density AY each slightly increased and the precipitation overvoltage EZ slightly decreased, as compared with the case where the electrolytic solution did not include the other additive (Comparative example 1). However, the absolute value of the maximum dissolution current density AX and the absolute value of the maximum precipitation current density AY each did not sufficiently increase and the precipitation overvoltage EZ did not sufficiently decrease. Accordingly, the electrolytic solution did not become electrochemically active sufficiently.

In contrast, when the electrolytic solution included the additive (Examples 1 to 3), the absolute value of the maximum dissolution current density AX and the absolute value of the maximum precipitation current density AY each greatly increased and the precipitation overvoltage EZ greatly decreased, as compared with the case where the electrolytic solution did not include the additive (Comparative example 1). Thus, the maximum dissolution current density AX and the maximum precipitation current density AY each sufficiently increased, and the precipitation overvoltage EZ sufficiently decreased. Accordingly, the electrolytic solution became electrochemically active sufficiently.

### [Conclusion]

Based upon the results presented in Table 1, when: the electrolytic solution included the electrolyte salt and the additive; the electrolyte salt included the magnesium salt; and the additive included any one or more of the first magnesium compound, the second magnesium compound, or the polycyclic aromatic hydrocarbon, the electrochemical activity improved. Accordingly, it was possible for the electrolytic solution including the magnesium salt as the electrolyte salt to achieve superior electrochemical activity.

Although the technology has been described above with reference to some embodiments and Examples, the configuration of the technology is not limited to those described with reference to the embodiments and Examples above, and is therefore modifiable in a variety of ways.

The effects described herein are mere examples, and effects of the technology are therefore not limited to those described herein. Accordingly, the technology may achieve any other effect.

Note that the technology may have the following configurations.
<1> An electrolytic solution for a magnesium battery, the electrolytic solution including:
   a solvent;
   an electrolyte salt; and
   an additive, in which
   the electrolyte salt includes a magnesium salt represented by Formula (1), and
   the additive includes at least one of a first magnesium compound represented by Formula (2), a second magnesium compound represented by Formula (3), or a polycyclic aromatic hydrocarbon,

      Mg[B(OC(R1)₃)₄]₂ ...... (1)
   where
   each of 24 R1's is any one of hydrogen (H), fluorine (F), an alkyl group, or a fluorinated alkyl group, and
   at least one of 24 R1's is either fluorine or the fluorinated alkyl group,

      Mg[(N(Si(R2)₃)₂]₂ ...... (2)
   where each of 12 R2's is either hydrogen or an alkyl group,

      Mg(R3)₂ ...... (3)
   where each of two R3's is either hydrogen or boron hydride (BH₄).
<2> The electrolytic solution for a magnesium battery according to <1>, in which the polycyclic aromatic hydrocarbon includes an acene.
<3> The electrolytic solution for a magnesium battery according to <1> or <2>, in which the solvent includes an ether compound having an ether bond (-O-).
<4> The electrolytic solution for a magnesium battery according to <3>, in which the ether compound includes dimethoxyethane.
<5> A magnesium battery including:
   a positive electrode;
   a negative electrode; and
   an electrolytic solution for a magnesium battery, in which
   the electrolytic solution for a magnesium battery includes
      a solvent,
      an electrolyte salt, and
      an additive,
   the electrolyte salt includes a magnesium salt represented by Formula (1), and
   the additive includes at least one of a first magnesium compound represented by Formula (2), a second magnesium compound represented by Formula (3), or a polycyclic aromatic hydrocarbon,

      Mg[B(OC(R1)₃)₄]₂ ...... (1)
   where
   each of 24 R1's is any one of hydrogen (H), fluorine (F), an alkyl group, or a fluorinated alkyl group, and
   at least one of 24 R1's is either fluorine or the fluorinated alkyl group,

      Mg[(N(Si(R2)₃)₂]₂ ...... (2)
   where each of 12 R2's is either hydrogen or an alkyl group,

      Mg(R3)₂ ...... (3)
   where each of two R3's is either hydrogen or boron hydride (BH₄).

## Claims

1. An electrolytic solution for a magnesium battery, the electrolytic solution comprising:
a solvent;
an electrolyte salt; and
an additive, wherein
the electrolyte salt includes a magnesium salt represented by Formula (1), and
the additive includes at least one of a first magnesium compound represented by Formula (2), a second magnesium compound represented by Formula (3), or a polycyclic aromatic hydrocarbon,
Mg[B(OC(R1)₃)₄]₂ ...... (1)
where
each of 24 R1's is any one of hydrogen (H), fluorine (F), an alkyl group, or a fluorinated alkyl group, and
at least one of 24 R1's is either fluorine or the fluorinated alkyl group,
Mg[(N(Si(R2)₃)₂]₂ ...... (2)
where each of 12 R2's is either hydrogen or an alkyl group,
Mg(R3)₂ ...... (3)
where each of two R3's is either hydrogen or boron hydride (BH₄).

2. The electrolytic solution for a magnesium battery according to claim 1, wherein the polycyclic aromatic hydrocarbon includes an acene.

3. The electrolytic solution for a magnesium battery according to claim 1 or 2, wherein the solvent includes an ether compound having an ether bond (-O-).

4. The electrolytic solution for a magnesium battery according to claim 3, wherein the ether compound includes dimethoxyethane.

5. A magnesium battery comprising:
a positive electrode;
a negative electrode; and
an electrolytic solution for a magnesium battery, wherein
the electrolytic solution for a magnesium battery includes
a solvent,
an electrolyte salt, and
an additive,
the electrolyte salt includes a magnesium salt represented by Formula (1), and
the additive includes at least one of a first magnesium compound represented by Formula (2), a second magnesium compound represented by Formula (3), or a polycyclic aromatic hydrocarbon,
Mg[B(OC(R1)₃)₄]₂ ...... (1)
where
each of 24 R1's is any one of hydrogen (H), fluorine (F), an alkyl group, or a fluorinated alkyl group, and
at least one of 24 R1's is either fluorine or the fluorinated alkyl group,
Mg[(N(Si(R2)₃)₂]₂ ...... (2)
where each of 12 R2's is either hydrogen or an alkyl group,
Mg(R3)₂ ...... (3)
where each of two R3's is either hydrogen or boron hydride (BH₄).
